# EUROPEAN PATENT APPLICATION

(11) **EP 4 318 259 A1**
(43) Date of publication of application: **07.02.2024**
(21) Application number: 22188811.8
(22) Date of filing: 04.08.2022
(51) Int. Cl.: G06F 16/178, G06F 16/901

(54) **METHOD FOR OPERATING A MAPPING DEVICE, COMPUTER PROGRAM AND STORAGE MEDIUM**

(71) Applicant: Siemens Aktiengesellschaft, 80333 München (DE)
(72) Inventor: Aigner, Tobias, 81543 München (DE); Shyam Sunder, Swathi, 560060 Bengaluru (IN)
(74) Representative: Siemens Patent Attorneys

(57) **Abstract**

The invention relates to a Method for operating a mapping device, which is configured to transform an input file (IDB) into a graph based on transformation instructions. Furthermore, the invention relates to a computer program and a storage medium.

## Description

The invention relates to a method for operating a mapping device, which in particular is part of an electronic computing device, according to patent claim 1. Furthermore, the invention relates to a computer program according to patent claim 9 and a storage medium according to patent claim 10.

Mapping of data, in particular relational data, to graphs is usually achieved by the generation of mapping files which can be processed by a processor or an engine, respectively. The processor or the engine build at least a part of a mapping device, which is in particular configured as a computing device.

The computing device reads or imports the mapping file and processes transformation instructions or mappings contained therein with data contained in an input file. The results are stored in graph databases and/or RDF files, where RDF stands for Resource Description Framework.

However, the mapping files used to convert the input file to the output file may contain errors. These errors may be syntactic, semantic, or even specific to the data. Such errors affect the operation of the mapping device.

It is therefore the task of the present invention to provide a method, a computer program and a storage medium by means of which a mapping device can be operated in a particularly error-free and thus efficient manner.

This object is solved according to the invention by the subject matter of the independent patent claims. Advantageous embodiments and further embodiments of the invention are indicated in the dependent patent claims as well as in the description and in the drawing.

A first aspect of the invention relates to a method for operating a mapping device, which in particular comprises a computing device or can be executed on the device. The method is for operating the mapping device, which is configured to transform an input file into a graph using at least one transformation instruction written in a graph mapping language and to store it in an output file. The method comprises several steps:
- Acquisition of the input file (IDB), which is to be transformed into the graph, by the mapping device; (S1)
- Acquisition by the mapping device of a mapping file (MF) written in the graph mapping language and comprising a plurality of the transformation instructions for the transformations of the input file (IDB); (S2)
- Execution of the transformation instruction in an order specified by the mapping file (MF); (S3)
- Checking whether a predetermined condition is satisfied for the particular transformation instruction to be executed and/or the result of the execution; (S4) and
- Executing a predetermined operation and/or outputting the transformation instruction executed and/or the result and/or the output file in dependence on the condition.

In particular, if the condition is not met, the next transformation instruction according to the sequence of the mapping file is executed.

In other words, in the method according to the invention, the mapping file is processed step by step, in particular line by line. Conditions are used, such as breakpoints, which take effect at certain conditions in the data, i.e., in the input file or the mapping file. In this way, for example, a controlled interruption of the execution can be carried out, so that what has been output so far can be analyzed. It is advantageous if the current execution status is displayed when the specified operation is performed, or the output file is output. If the mapping file is, for example, a source code of the mapping language, the columns and/or lines of the source code can be highlighted. Additionally, or furthermore, the output file, which is in particular an RDF output, can be displayed and generated.

The condition can, for example, describe how a transformation must look like, so that, for example, a type of data can only be transformed into a certain type of data. For example, names cannot be converted to sizes. If this happens, the condition can be fulfilled.

The output file contains a graph, which is stored in the output file and contains processed data of the input file. These are e.g., combined as a triple.

Each triple represents a statement in which a subject and an object, formed from the data, are related to each other (relation). Relations are directed from the subject to the object and named with the predicate. For example, a certain size can be assigned to a certain name, and the predicate can be the verb "has". Triples referring to the same subjects or objects form a semantic network, which is often represented in tabular or graphical form. Graphically speaking, each statement in RDF is a simple sentence.

The output file or the result is advantageously provided via an interface of the mapping device or, if the mapping device is the computing device, is stored, for example, in a memory area of a memory device of the computing device.

When the input files and/or the mapping file are acquired, they are advantageously read, for example, into a memory storage section or a storage medium that can be connected to the computing device via an interface. Advantageously, the input file or the mapping file is simultaneously stored, for example in a RAM memory of the computing device, during the acquisition.

The invention is based on the understanding that mapping files can have errors. The search for such errors can be very time-consuming and tedious. In this regard, the search depends, for example, on a processor implementation and its error handling. The processor implementation can be configured in such a way that finding errors is made difficult and can often only be solved by a trial-and-error approach.

Debuggers are known for programming languages, which enable a developer to execute the program code and interrupt it at desired points, for example, to check the current state of the program. Another function of a debugger is a line-by-line execution of the program code. This is important for finding and identifying errors. Furthermore, the program can be examined interactively by evaluating source code provided by the user during execution. Furthermore, the results computed up to that point based on the source code can be displayed.

An essential idea of the method according to the invention is to provide the functions of a debugger for graph mapping languages, where one of these languages can be, for example, R2RML and/or RML in other terms "(R2)RML" - , respectively, but the method according to the invention is not limited to a specific graph mapping language.

R2RML and RML -"(R2)RML" stands for both or either one of them - are mapping specifications used to convert source data from various heterogenous sources to RDF format. For this, one or more R2RML and/or RML processor units are used. Typically, it is used in ETL pipelines. Several solutions exist to process the mappings. The available tools differ in various aspects, have different features and advantages as well as disadvantages. For instance, this includes interfaces to the tools, how a processor is used, for example as an API or as a graphical user interface or as a library, form of access input and output modes and/or supported databases. Likewise, the RDF generation and serialization time differ across the available tools.

Conventionally, integrating the structured RDB-format source data corresponding to different domains and/or formats involves the use of ETL "Extract, Transform, Load" processes for mapping the structured data to RDF data especially by an ontology of a knowledge graph.

Via a display device or a human-machine interface, different modes of interaction with the mapping device can be suggested to the user, so that, for example, a text-based and/or a graphics-based interaction is possible via the user interface. Thus, in text mode, for example by means of a command line, the user can initiate commands, or operations, such as setting a breakpoint in a particular line, by the method according to the invention. Additionally, or alternatively, the user can interact via a graphical user interface, where this can be provided, for example, as a stand-alone desktop app or as an add-on for an editor. For example, setting a breakpoint can be done by clicking with a mouse pointer on a corresponding line.

One advantage of the method according to the invention is that the analysis of the input file and/or the mapping file can be carried out particularly efficiently, so that the mapping device can also be operated particularly efficiently. Thus, for example, a premature failure of the mapping device or the computing device can be avoided.

Instead of trial and error, the method provides a systematic approach to troubleshooting. This improves the work of developers and additionally increases the development speed, saving time and/or costs. When errors occur, it is easier to use the method according to the invention than to use smaller mapping files and/or manually construct data to find errors. Moreover, for developers using the mapping device, a learning curve may be flat. Thus, in summary, the mapping device may be operated in a particularly advantageous manner. Furthermore, for example, for further use of the output file, for example in a production environment in which components are manufactured on the basis of the graph, particularly advantageous operation can be enabled.

In one embodiment of the invention, a break point is determined as the predetermined operation, at which the execution of the transformation instruction is interrupted. In other words, the execution of the transformation instructions takes place up to a certain transformation instruction, which is determined or characterized by the break point. In this case, the break point or the operation can be dependent on the result and/or the transformation instruction. This has the advantage that the method can be used to check in a particularly simple manner whether the specified condition is fulfilled.

In a further embodiment of the invention, in the event of fulfillment of the specified condition or in the event of a deviation of a result calculated by means of the mapping file from a target value, an input prompt is provided to the human interface device, by means of which the transformation instruction causing at least the condition can be changed. In particular, the updated mapping file or the output file can be output by a display device and/or via a further interface when deviating from the target value or when fulfilling the predetermined condition, respectively. In other words, when the results deviate from the expected value, an editing means is provided which allows a user to edit the mapping file and/or additionally or alternatively also the input file, so as to avoid a misbehavior of the mapping device. This results in the advantage that the mapping device can be operated as error-free as reasonably possible by the method.

In a further embodiment of the invention, the mapping device comprises an (R2)RML processor device through which the execution is performed. In other words, for example, a specialized chip is provided in the computing device, which may comprise, for example, a GPU (Graphics Processing Unit) and/or a TPU (Tensor Processing Unit) and/or a CPU (Central Processing Unit) with a special instruction set. Additionally, or alternatively, a separate memory area or a separate program code can be provided, which functions in particular as a parser for the input file into the output file. This has the advantage that the process can be operated particularly efficiently.

In a further embodiment of the invention, the checking and/or the execution of the operation is performed by a debugger device which is connected to the processor device via a communication interface. In other words, two independent devices are used in the method according to the invention, which may each be designed, for example, as a separate processor or computing device and/or as a separate software implementation. In this context, the two devices can be connected via a communication interface, which can be designed in software and, in particular, in hardware. For example, the debugging device can be performed on its own computing device, which is connected to the mapping device, for example by means of a network, and can thus control it for the analysis of the input file and/or the mapping file. This results in the advantage that the method can be used in a particularly flexible manner. Another advantage is that a particularly large amount of energy can be saved, since the debugger device and the processor device can each be designed as specialized hardware.

In a further embodiment of the invention, the predetermined operation is determined and/or a transformation instruction fulfilling the condition is changed by means of an artificial intelligence. In other words, a self-learning algorithm and/or a neural network are used to specify a predetermined operation to be performed based on the condition when performing the method. Additionally, or alternatively, if the condition is a deviation from an expected value of the output, respectively when creating the graph, the transformation instruction is changed by means of self-learning algorithm and/or neural network in particular such that the expected value is fulfilled. This results in the advantage that the method can be carried out with a particularly small number of user interventions. As a result, the mapping device can be operated particularly efficiently.

In a further embodiment of the invention, (R2)RML is used as the graph mapping language. In other words, a particularly advantageous way of displaying mappings of relational data for RDF data models is provided. This results in the advantage that the method can be used particularly efficiently. It should be mentioned that the method according to the invention is by no means limited to a specific graph mapping language but can be applied to any graph mapping language.

In a further embodiment of the invention, individual triples, which characterize the graph of the output file, are stored in a serialized form in said output file. In other words, the data is serialized when the input file is converted to the output file using the graph mapping language. This results in the advantage that the output file can be provided, for example, in a particularly compact manner, as a result of which, for example, a memory requirement of a storage device is particularly low. Furthermore, there is the advantage that energy is not unnecessarily wasted when exchanging files with a further mapping device or a further computing device, for example via a computer network.

A second aspect of the invention relates to a computer program. The computer program may for example be loaded in a memory of a computing device of the mapping device, and comprises program means for executing the steps of the method when the computer program is executed in the computing device.

In this regard, advantages, and advantageous embodiments of the first aspect of the invention are considered advantages and advantageous embodiments of the second aspect of the invention, and vice versa.

A third aspect of the invention relates to a storage medium. The storage medium comprises electronically readable control information stored thereon, the control information comprising at least one computer program according to the second aspect of the invention and being configured to perform a method presented herein according to the first aspect of the invention when the storage medium is used in the computing device.

In this regard, advantages, and advantageous embodiments of the third aspect of the invention are to be regarded as advantages and advantageous embodiments of both the second and the first aspect of the invention, and vice versa in each case.

The present invention can take a form of a computer program comprising program modules accessible from computer-usable or computer-readable medium storing program code for use by or in connection with one or more computers, processors, or instruction execution system. For the purpose of this description, a computer-usable or computer-readable medium can be any apparatus that can contain, store, communicate, propagate, or transport the program for use by or in connection with the instruction execution system, apparatus, or device. The medium can be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and DVD. Both processors and program code for implementing each aspect of the technology can be centralized or distributed (or a combination thereof) as known to those skilled in the art.

For use cases or use situations which may arise in carrying out the method and which are not explicitly described here, it may be provided that, in accordance with the method, an error message and/or a prompt for user feedback is output and/or a default setting and/or a predetermined initial state is set.

While the present invention has been described in detail with reference to certain embodiments, it should be appreciated that the present invention is not limited to those embodiments. In view of the present disclosure, many modifications and variations would be present themselves, to those skilled in the art without departing from the scope of the various embodiments of the present invention, as described herein. The scope of the present invention is, therefore, indicated by the following claims rather than by the foregoing description. All changes, modifications, and variations coming within the meaning and range of equivalency of the claims are to be considered within their scope. All advantageous embodiments claimed in method claims may also be apply to system/apparatus claims.

It shows:
FIG 1 schematic flowchart of a method of operating a mapping device; and.
FIG 2 another schematic flow chart of the method.

Until now, it has been a problem to operate a mapping device in such a way that an error analysis can be performed particularly efficiently, and thus, for example, graphs created by the mapping file are correct or the mapping device itself can be operated efficiently.

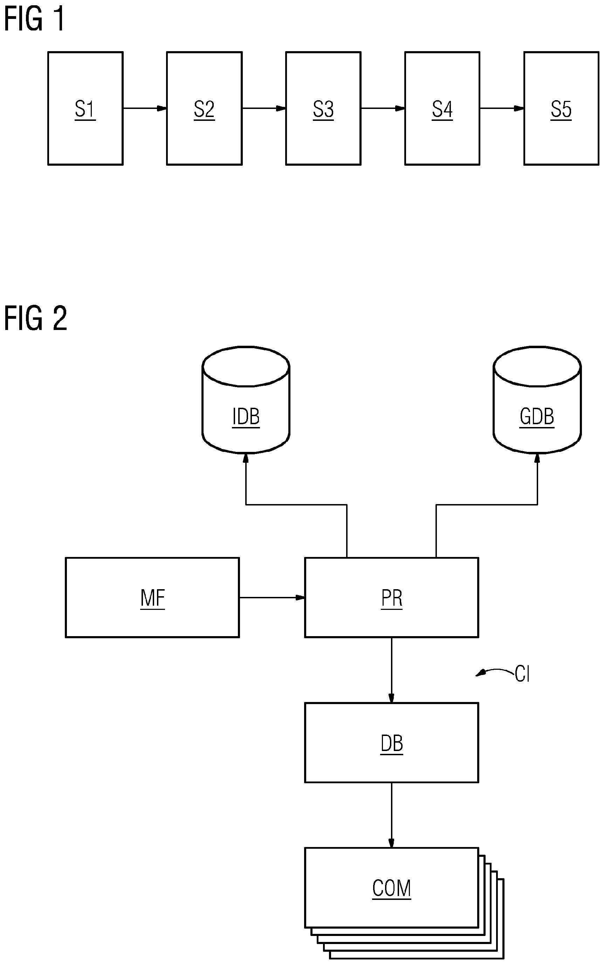

Therefore, in the following a method, a computer program and a storage medium are introduced, by which this problem can be met. Thus, the presented method serves for operating the mapping device, which is configured in particular as a computing device, which is configured to convert an input file IDB into a graph by means of at least one transformation instruction, which is written in a graph mapping language, and to store it in an output file GDB, wherein the method comprises several steps:
The sequence of steps is shown in Fig. 1, wherein in a first step S1 the input file IDB, which is to be converted or transformed into the graph, is acquired by the mapping device.

In a second step S2, a mapping file MF is acquired by the mapping device, which is written in the graph mapping language, and which comprises a plurality of transformation instructions, in particular to be executed successively, of the at least one transformation instruction for the transformation of the input file IDB into the graph file.

In a third step S3, execution of the transformation instruction in the order specified by the mapping file MF is performed by the mapping device.

In a fourth step S4, a check is performed to determine whether a predetermined condition is satisfied for the respective transformation instruction just executed and/or to be executed and/or the result of the execution or performance of the transformation criterion.

Subsequently, in a step S5, the execution of a predetermined operation and/or the output of a transformation instruction and/or of the result and/or of the output file GDB takes place depending on the fulfillment of the condition. In particular, if the condition is not fulfilled, the process continues with step S3.

By advantageous data mapping, data migration, data integration, data transformation or data warehouse can be advantageously provided.

In this context, it is shown to be advantageous if the mapping device for the execution comprises an (R2)RML processor device PR. Additionally or alternatively, the checking and/or the execution of the operation is performed by means of an (R2)RML debugger device DB, which is connected to the (R2)RML processor device via a communication interface.

Fig. 2 shows in a further schematic view a sequence of a possible embodiment of the method, wherein the input data IDB is imported by the (R2)RML processor device PR, which is connected to the (R2)RML debugger device DB via the communication device CI. Furthermore, the mapping file MF is also imported by the processor device PR.

The (R2)RML debugger device DB can be configured in such a way that a user can determine, as a predetermined operation, a breakpoint in which the execution of the transformation instruction is interrupted. Additionally, or alternatively, when the predefined condition is fulfilled, for example due to a deviation from a target value, an input request can be provided at a human-machine-interface-device, by which the transformation instruction fulfilling at least the condition can be changed.

In addition, or alternatively, a self-learning algorithm or artificial intelligence can be used for this, which determines the specified operation and/or changes the transformation instruction fulfilling the condition. For this purpose, debugger commands COM can be provided in each case via the interface or by the self-learning algorithm. The debugger device DB uses these debugger commands COM to perform the operation, for example.

The presented method allows the (R2)RML processor PR to parse the input file and outputs the mapping for the resulting output file, in particular an RDF files and/or a graph database GDB, providing callbacks for each executed line to allow the debugger to interrupt the execution of the mapping.

The (R2)RML debugger device DB can exchange callbacks with the (R2)RML processor device PR and tracks its status and provides methods for user interaction and control, such as input options for the debugger commands COM. The debugger commands COM may include breakpoints, execution flow, continue, step through and skip. Furthermore, printing source codes, listing source codes, displaying the resulting output file, displaying database contents, for example with columns and/or rows, as well as displaying the rows and/or columns of the source code is possible.

If a command, especially the given operation, is provided, the debugger device DB executes it and displays the result, for example, in a command line and/or in a graphical user interface. If no command is found, the execution of the program can be continued

Thus, a user can directly access the graph mapping by the presented method. Thus, in addition to checking the current state of the mapping, the user can, for example, update the mapping file particularly advantageously.

Additionally, or alternatively, time-travel debugging can be implemented in a further embodiment. With this method it is possible to go back and forward in the mapping process. The advantage of this is that it is easy to rewind and repeat the steps without re-executing the mapping.

Preferably, (R2)RML can be used as the graph mapping language.

The presented method, the computer program and the storage medium allow a particularly simple processing of mapping files since errors occurring in them can be easily detected. Thus, the errors do not have to be tracked down by means of trial and error, but a systematic procedure is provided for this purpose. Thus, time and costs can be saved. Furthermore, developers who are familiar with the concept of a debugger have a flat learning curve when using the mapping device. Consequently, a debugger for graph mapping languages is presented.

## Claims

1. Method for operating a mapping device, which is configured to transform an input file (IDB) into a graph on the basis of at least one transformation instruction written in a graph mapping language and to save the graph in an output file (GDB), comprising the following steps:
- Acquisition by the mapping device of the input file (IDB), which is to be transformed into the graph; (S1)
- Acquisition by the mapping device of a mapping file (MF) written in the graph mapping language and comprising a plurality of the transformation instructions for the transformations of the input file (IDB); (S2)
- Execution of the transformation instruction in an order specified by the mapping file (MF); (S3)
- Checking whether a predetermined condition is satisfied for the particular transformation instruction to be executed and/or the result of the execution; (S4) and
- Executing a predetermined operation and/or outputting the transformation instruction executed and/or the result and/or the output file in dependence on the condition.

2. Method according to claim 1, **characterized in that** the predetermined operation determines a breakpoint at which the execution of the transformation instructions is interrupted.

3. Method according to claim 1 or 2, **characterized in that** (R2)RML is used as the graph mapping language.

4. Method according to one of the previous claims, **characterized in that** the mapping device comprises an (R2)RML processor device (PR) by which the execution is performed.

5. Method according to claim 4, **characterized in that** the checking whether the predetermined condition is fulfilled and/or the execution of the operation is performed by an (R2)RML debugger device (DB) which is connected to the (R2)RML processor device (PR) via a communication interface (CI) .

6. Method according to one of the previous claims, **characterized in that** by means of an artificial intelligence the predetermined operation is determined and/or a transformation instruction fulfilling the condition is changed.

7. Method according to one of the previous claims, **characterized in that** in the event of fulfillment of the predetermined condition, a prompt is provided at a human-machine interface, by means of which the transformation instruction causing at least the condition can be changed.

8. Method according to one of the previous claims, **characterized in that** individual triples, which characterize the graph of the output file (GDB), are stored in a serialized form in said output file (GDB).

9. Computer program which is directly loadable into a memory of a computing device, comprising program means for executing the steps of the method according to any of claims 1 to 8 when the program is executed in the electronic computing device.

10. Storage medium having electronically readable control information stored on it comprising at least one computer program according to claim 9 and configured to perform a method according to one of the claims 1 to 8 when the storage medium is used in a computing device.
